Europäisches Patentamt

European Patent Office

Office européen des brevets

(19)

(11) Publication number: **0 257 806 B1**

(12) **EUROPEAN PATENT SPECIFICATION**

(45) Date of publication of patent specification: **16.09.92** (51) Int. Cl.5: **G01N 25/68**

(21) Application number: **87306616.1**

(22) Date of filing: **27.07.87**

(54) **Dew point analyzer.**

<div style="display:flex">

<div>

(30) Priority: **29.08.86 CA 517228**

(43) Date of publication of application:
**02.03.88 Bulletin 88/09**

(45) Publication of the grant of the patent:
**16.09.92 Bulletin 92/38**

(84) Designated Contracting States:
**AT BE CH DE ES FR GB GR IT LI LU NL SE**

(56) References cited:
**DE-A- 3 431 624**
**GB-A- 2 036 339**
**US-A- 2 733 594**
**US-A-42 402 841**

</div>

<div>

(73) Proprietor: **NOVA HUSKY RESEARCH CORPO-RATION**
**801 - 7th Avenue S.W.**
**Calgary Alberta T2P 2N6(CA)**

(72) Inventor: **Siska, Paul**
**185 Edgehill Drive N.W.**
**Calgary Alberta, T3A 2Y5(CA)**
Inventor: **Vij, Kewal K.**
**91 Edendale Crescent N.W.**
**Calgary Alberta, T3A 2Y5(CA)**
Inventor: **Eisenbart, Gules**
**335 Parkwood Close S.E.**
**Calgary Alberta, T2J 3V9(CA)**

(74) Representative: **Adams, William Gordon et al**
**RAWORTH, MOSS & COOK 36 Sydenham Road**
**Croydon Surrey CR0 2EF(GB)**

</div>

</div>

## Description

The present invention relates to the analysis of the dew point of condensible gases contained in gas streams, and provides a device suitable for the measurement of the dew points of hydrocarbon and of water vapour, and which can measure both dew points in a single run.

Natural gas streams which are conveyed through pipelines are required to have limited water and condensible contents. Unless such limitations are observed, pipeline problems can occur, including compressor malfunction, metering errors and decreased gas transmission capacity.

A manual test device for testing the dew point of water and hydrocarbon, known as the U.S. Bureau of Mines Dew Point Tester, is commonly employed for this purpose. This prior art device comprises a gas sample-receiving chamber in which is located a polished mirror, which is gradually chilled either by propane or carbon dioxide until condensation appears on the mirror. The temperature at which such condensation is observed is the dew point. In natural gas pipelines, conditions are usually such that condensation occurs in the form of ice crystals. The dew point then is correlated to the concentration of the species in the gas stream.

The latter apparatus requires batch operation, is manual and requires subjective observation of the mirror to determine the dew point. Differentiation between water and hydrocarbon dew point is difficult to achieve.

A number of proposals have been made to provide for more automated determination by detecting light reflected from the mirror surface. One such proposal appears in GB-A-1,548,976 (Schlumberger) which describes an apparatus for measuring the hydrocarbon dew point of a gas stream. As described therein, a frosted mirror is illuminated by a light source and light diffused (scattered) by the mirror is detected by a photoelectric cell. The mirror is arranged to be cooled by a thermo-electric cooler and to be heated by a resistance heater. The mirror is progressively cooled as the test gas is passed through the chamber. When hydrocarbon condensation on the mirror occurs at its dew point, the condensation renders the mirror less diffusing with respect to the light, so that the photoelectric cell receives less light. The photoelectric cell is connected in an electrical circuit with the cooler and with the heater, and the circuit is arranged to reheat the mirror as soon as hydrocarbons condense on the mirror; the mirror is constantly recycled close to the dew point allowing this to be measured.

This system could not be used to determine a second, lower, dew point of another substance, and the only use disclosed for this device is the detection of a single hydrocarbon dew point. No mention is made of detection of the water dew point and no suggestion is made to differentiate between the hydrocarbon and water dew points. US-A-4 240 284 concerns the detection of hydrocarbon dew point, but additionally considers the detection of water dew point using a polished rather than roughened surface, as an alternative.

Other proposals for automated dew point measuring systems are contained in the specifications of the following patents: U.S.-A-4,216,669 (Harding), 4,345,455 (Hayes), GB-A-2,036,339 (Dadachanji), USSR-A-813,207, DE-A-3 431 624.

All of the above patents, like GB-A-1548976 Schlumberger, describe means for automatically stabilizing the mirror temperature or for reheating the mirror after a dew point has been determined. All such systems are inherently unsuitable for measurement of a second, lower dew point of another substance, since they preclude continued cooling after one dew point has been detected. None of these patents indicates how dew points of two different gas species such as water vapour and hydrocarbon could be distinguished without modification to the system.

In accordance with the present invention, there is provided a novel automatic procedure and apparatus for determining the dew point for both hydrocarbons and water in a gas stream and for differentiating between the two in a single run. In this way, the problems of the prior art noted above are overcome.

In one aspect, the present invention provides a method for the independent determination of the dew points of hydrocarbon and of water in a gas stream. A sample of the gas stream is provided in a test zone in contact with a light reflecting and scattering surface. A light beam is shone onto the surface at an incident angle thereto causing reflection and scattering of light from the surface. The incident angle and the field of view of optics associated with the light detector are adjusted to receive only the scattered light from the surface. The surface preferably is in two parts, the first highly polished and reflective and the second roughened to provide sufficient scattered light. The entire surface is cooled and the wetting properties of hydrocarbon and water are used to differentiate between their respective dew points. Hydrocarbons condense as a thin film and, in the presence of condensation, the rough scattering surface becomes more reflective causing a decrease of scattered light intensity. In case of water condensation, in the form of droplets, the polished and highly reflective surface causes more scattering of light and an increase of light intensity.

The temperature of the surface when the intensity change occurs is determined as the dew point and the sense of intensity change is used to distinguish unambiguously between the hydrocarbon and water dew points.

The present invention, therefore, detects scattered light, as in the case of GB-A-1,548,976, but differentiates between different types of change in intensity by monitoring selectively the changes in scattered light intensity from both the roughened and polished surfaces. Unlike the automated systems described in the GB-A-1548976, in the U.S. and USSR patents, and the British Dadachanji application referred to above, in accordance with the present invention the mirror temperature is not automatically stabilized at a first dew point; rather cooling of the mirror is continued until the second dew point is observed.

Once the dew points have been determined, this information can then be used to determine the respective concentration of hydrocarbon and water in the gas stream sample and hence whether or not the concentration of these species are within the desired limits.

In another aspect, the present invention also includes a dew point detection device for effecting the determination method of the invention. The device includes a gas sample-receiving chamber and a planar light reflecting and scattering surface located in the chamber. The surface has a first portion which is polished to be highly reflective and a second portion which is roughened to be less reflective and more scattering, for the reasons discussed above. Means are provided for changing the temperature of the surface and for determining the temperature of the surface. A window, transparent to light, is provided in the chamber generally coincident with the surface and a light beam source is located external of the chamber to direct a beam of light through the window onto the surface at an angle so as to scatter light from the surface. Scattered light detection means is also provided to selectively detect light scattered by the surface and changes in intensity of the scattered light.

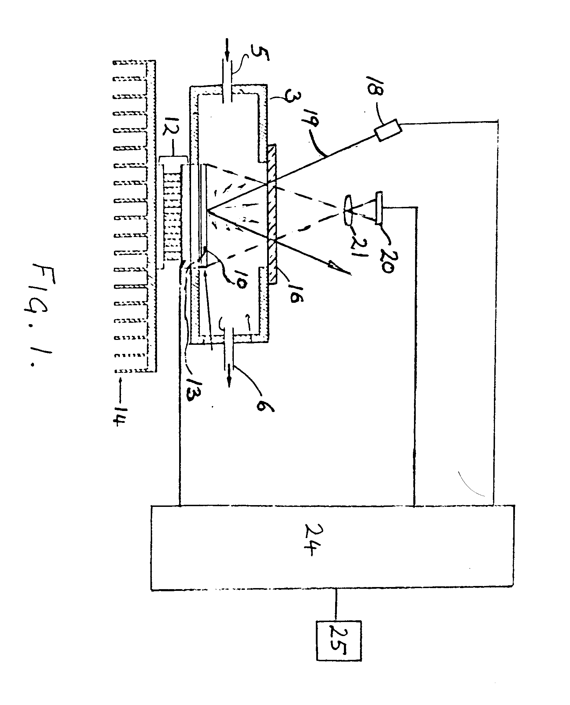

Figure 1 is a schematic drawing of a dew point detection device constructed in accordance with one embodiment of the invention.

Referring to Figure 1, a dew point detection device comprises an enclosed chamber 3 having an inlet 5 and an outlet 6 to permit a gas sample to be continuously passed through the chamber 3.

A flat mirror 10 is located inside the chamber 3 in operative association with a cooling/heater unit 12, preferably a thermoelectric device which has a temperature sensor 13 which detects the temperature of the mirror surface 10. The unit 12 is also connected to a heat sink 14.

A light transparent window 16 is provided in the wall of chamber 3. A light beam source 18 is located external of the chamber 3 to direct a light beam 19 onto the mirror surface 10 at an oblique angle as shown so that the beam is scattered from the mirror surface 10 back out through the window 16.

A scattered light detection device 20 is located above the chamber 3 perpendicularly to surface 10 to detect only the light scattered in the vertical direction from this surface; this scattered light is focussed by lens 21. The light detection device is of the form that it can detect the changes in light intensity scattered from any point of an operative area of surfaces of mirror 10. Preferably, the light detector device is a charge coupled device (CCD) array.

A micro-computer based data acquisition, data processor and control unit 24 is provided to acquire data from the light detection device 20 and to determine the onset of condensation. The unit 24 is also arranged to control the cooling/heating of the mirror surface 10 by switching the cooler/heater unit 12 to either cooling or heating mode. It also controls the output light intensity of light source 18 depending on the surface conditions of light scattering mirror 10.

A unit 25 is provided either to display the dew point temperature and the component causing the condensation or to provide appropriate telemetry signal for transmission to a remote data gathering system

OPERATION

In operation of the device of Figure 1, a test gas flows through the chamber 3 across the mirror surface 10. The temperature of the surface 10 is varied by the cooler/heater unit 12 and measured by the temperature sensor 13. A light beam 19 is directed onto the surface 10 and the light scattered in the field of view of the light detecting device 20 is monitored.

A change in intensity of the scattered light is employed as an indicator of the presence of condensation on the cooled surface. The measured of scattered light as an indicator of condensation has the advantage that the differing wetting properties of water and hydrocarbon can be used to distinguish between their respective dew points.

Hydrocarbons condense on the surface as a thin film. The presence of this film decreases the intensity of the scattered light. Hence, a decrease in the light intensity in the vertical direction detected by the light detecting device 20 is indicative of hydrocarbon condensation and the appropriate temperature is read off the temperature sensor 13.

On the other hand, water condenses in the form of droplets and causes more light to scatter and hence causes an increase in scattered light intensity in the vertical direction as determined by the light detector. Hence, an increase in scattered light intensity as detected by the light detector is indicative of water condensation and the appropriate temperature is read off the temperature sensor 13.

Since the condensation of hydrocarbon and water from the test gas stream produce opposite results in terms of the sense of the associated change in scattered light intensity, a clear differentiation can be made between the hydrocarbon and water dew points.

Data from the light detector 20 is processed by the processor and control unit 24 to determine the onset of condensation. In the absence of condensation, the processor and control unit 24 lowers the temperature of the mirror surface 10 progressively by cooler/heater 12 and as soon as condensation on any part of the mirror surface 10 is detected, that temperature is recorded via temperature sensor 13. The unit 24 now puts the cooler/heater 12 into heating mode to remove the condensation from the mirror surface 10 after which the whole process of cooling the mirror 10 surface begins again at a rate much slower than before to make an accurate determination of temperature at which condensation occurs. The data processor and control unit 24 records this temperature and also determines whether the condensation is due to hydrocarbon or water. The unit 25 either displays the dew point temperature and the component (either hydrocarbon or water) causing the condensation for the operator or conditions the data to produce an appropriate signal for transmission to a remote data gathering system.

After determining the dew point temperature of one component (hydrocarbon or water) the mirror surface 10 is cooled progressively further to determine the dew point of the second component by repeating the process outlined above, so that both dew points are determined in a single run.

In practice, it has been found that the sensitivity of the system to decrease in the intensity of the scattered light and hence the accuracy of determining the dew point for hydrocarbon in the gas stream is significantly improved if the surface 10 is roughened to increase the intensity of scattered light. However, such roughening of the surface decreases the sensitivity to water dew point determination. Preferably, therefore, the surface 10 is formed as a combination of a highly polished portion and a roughened or dulled portion. Since the light detector 20 detects changes in light intensity over the operative part of the surface selectively the optimum sensitivity to hydrocarbon and water dew point is provided with this structure. Sand blasted anodized aluminum was found to give the best results for the roughened part of the mirror.

The automatic determination of the respective dew points for hydrocarbon and water enables the concentrations of those species in the gas stream to be accurately determined.

In summary of this disclosure the present invention provides a novel dew point detection device and procedure which is automatic, can differentiate between water and hydrocarbon dew points and is sensitive. Modifications are possible within the scope of this invention.

**Claims**

1. A method for the determination of dew points in a gas stream by causing a sample of the gas stream to enter a gas sample receiving chamber (3) and contact a mirror surface (10) while a light beam (19) is shone onto said surface at an oblique angle thereto such that, in the absence of condensation, the beam (19) is at least partially reflected by the surface (10) while the surface is cooled, by arranging light detection means (20) so as not to receive any reflected light and by obtaining electrical signals indicating the intensity of light scattered from the said surface (10), said signals being monitored during said cooling step; characterised in that:-

   the gas stream contains both hydrocarbon and water vapour;

   said mirror surface (10) has a first polished and highly reflective portion and a second, roughened, less reflective portion such that, in the absence of condensation, the beam (19) is substantially reflected by the first portion and substantially scattered by the second portion;

   said light detection means (20) indicating the intensity of light scattered from both of said Portions;

   and by independently determining the dew points of the hydrocarbon and of the water vapour in a single measuring run, including the steps of determining the dew point for water vapour by recording the temperature of said surface (10) when said signals indicate an increase in said intensity due to light scattering, and determining the dew point of hydrocarbon by recording the temperature of said surface (10) when said signals indicate a reduction in intensity, the cooling being continued after determination of the first detected dew point and until both of said dew points have been determined.

2. A dew point detection device for determining dew points in a gas stream comprising:
   a gas sample-receiving chamber (3);
   a mirror surface (10) located in said chamber;

means (12) for changing the temperature of said surface and means (13) for monitoring the temperature of said surface;

a light beam source (18) arranged to direct a beam (19) of light onto said surface at an oblique angle while said surface (10) is cooled so that light from the beam (19) is scattered and reflected from said surface (10); and

light detection means (20) located along a light detection path generally perpendicular to said surface for detecting light scattered from said surface (10) and producing output signals corresponding to the intensity of light scattered from said surface;

characterized in that said mirror surface (10) has a first portion which is polished to be highly-reflective and a second portion which is roughened to be light scattering;

and in that said light detection means are arranged to receive only light scattered from both portions of said surface (10); said light detection means (20) being connected into circuit means (24) capable of registering both an increase in light scattered from the first portion of said surface (10) as an indication of water dew point, and a decrease in light scattered from the second portion of said surface (10) as an indication of hydrocarbon dew point, and

said temperature changing means (12) being arranged to continue cooling of said surface (10) after the first dew point has been indicated and so that both dew points are determined in a single measuring run.

3. Apparatus according to claim 2 wherein the scattered light detection means (20) is constructed to detect selectively light scattered from both the highly reflective and roughened portions of said surface (10).

4. Apparatus according to claim 2 or 3 including a data processing and control means (24) to control changing the temperature of the said surface (10) and to control the output light source (18) depending on the surface conditions of the said surface (10).

5. Apparatus according to claim 4 wherein said chamber (3) has provision to permit a test gas to flow through said camber (3) in contact with said surface (10).

6. Apparatus according to claim 5 wherein said means (12) for changing the temperature of said surface (10) comprises a theremoelectric cooler/heater and said means (13) for determining the temperature of the surface comprises a temperature sensor.

## Patentansprüche

1. Verfahren zur Bestimmung von Taupunkten in einem Gasstrom in dem eine Probe des Gasstroms zum Eintritt in eine Gasprobenaufnahmekammer (3) und in Berührung mit einer Spiegeloberfläche (10) gebracht wird, während ein Lichtstrahl (19) auf diese Oberfläche unter einem schrägen Winkel zu dieser gerichtet wird, so daß beim Fehlen von Kondensation der Strahl (19) mindestens teilweise durch die Oberfläche (10) reflektiert wird, während die Oberfläche gekühlt wird, und indem Lichtdetektormittel (20) so angeordnet werden, daß sie kein reflektiertes Licht empfangen, und elektrische Signale erhalten werden, welche die Intensität des von der genannten Oberfläche (10) gestreuten Lichtes angeben, welche Signale während des genannten Abkühlschrittes überwacht werden, dadurch gekennzeichnet, daß der Gasstrom sowohl Kohlenwasserstoff als auch Wasserdampf enthält, daß die genannte Spiegeloberfläche (10) einen ersten, polierten und stark reflektierenden Teil und einen zweiten, aufgerauhten, weniger reflektierenden Teil hat, so daß beim Fehlen von Kondensation der Strahl (19) im wesentlichen durch den ersten Teil reflektiert und im wesentlichen durch den zweiten Teil gestreut wird, daß die genannten Lichtdetektormittel (20) die Intensität von Licht, welches von beiden genannten Teilen gestreut wird, angeben, und daß die Taupunkte des Kohlenwasserstoffes und des Wasserdampfes unabhängig in einem einzigen Meßlauf bestimmt werden, der die Schritte des Bestimmens des Taupunktes für Wasserdampf durch Aufzeichnen der Temperatur der genannten Oberfläche (10), wenn die genannten Signale einen Anstieg der genannten von der Lichtstreuung stammenden Intensität anzeigen, und des Bestimmens des Taupunktes von Kohlenwasserstoff durch Aufzeichnen der Temperatur der genannten Oberfläche (10), wenn diese Signale eine Verminderung der Intensität anzeigen, beinhaltet, wobei das Abkühlen nach der Bestimmung des ersterfaßten Taupunktes fortgesetzt wird, bis beide Taupunkte bestimmt worden sind.

2. Taupunktbestimmungsgerät zum Bestimmen von Taupunkten in einem Gasstrom, welches Gerät eine Gasprobenaufnahmekammer (3), eine in dieser Kammer angeordnete Spiegeloberfläche (10), Mittel (12) zur Veränderung der Temperatur dieser Oberfläche und Mittel (13) zum Überwachen der Temperatur dieser Oberfläche, eine Lichtstrahlquelle (18), welche so angeordnet ist, daß sie einen Lichtstrahl (19) unter einem schrägen Winkel auf die genannte Oberfläche richtet, während diese Oberfläche (10) gekühlt wird, so daß Licht vom Strahl (19) von dieser Oberfläche (10) gestreut und reflektiert wird, und Lichtdetektormittel (20) aufweist, welche längs eines Lichtdetektionsweges im wesentlichen senkrecht zur genannten Oberfläche plaziert sind, um von dieser Oberfläche (10) gestreutes Licht zu erfassen und Ausgangssignale, welche zur Intensität des von der genannten Oberfläche gestreuten Lichtes korrespondieren, zu erzeugen, dadurch gekennzeichnet, daß die Spiegeloberfläche (10) einen ersten Teil, der um stark reflektierend zu sein poliert ist, und einen zweiten Teil hat, welcher um lichtstreuend zu sein aufgerauht ist, und daß die Lichtdetektormittel so angeordnet sind, daß sie nur von beiden Teilen der genannten Oberfläche (10) gestreutes Licht empfangen, welche Lichtdetektormittel (20) mit einem Schaltkreis (24) verbunden sind, mit dem sowohl ein Anstieg des vom ersten Teil der genannten Oberfläche (10) gestreuten Lichtes als Anzeige eines Wassertaupunktes als auch ein Abfall des vom zweiten Teil der genannten Oberfläche (10) gestreuten Lichtes als Anzeige eines Kohlenwasserstofftaupunktes registrierbar ist, und daß die genannten Temperaturveränderungsmittel (12) angeordnet sind, um das Kühlen der genannten Oberfläche (10) nachdem der erste Taupunkt angezeigt worden ist, fortzusetzen und so beide Taupunkte in einem einzigen Meßlauf bestimmt werden.

3. Gerät nach Anspruch 2, dadurch gekennzeichnet, daß die Detektormittel (20) für gestreutes Licht zur selektiven Erfassung von Licht, welches vom stark reflektierenden und vom aufgerauhten Teil der genannten Oberfläche (10) gestreut wird, ausgebildet sind.

4. Gerät nach Anspruch 2 oder 3, welches Datenverarbeitungsund Überwachungsmittel (24) aufweist, um die Veränderung der Temperatur der genannten Oberfläche (10) zu kontrollieren, und um den Ausgang der Lichtquelle (18) in Abhängigkeit von den Oberflächenzuständen der genannten Oberfläche (10) zu steuern.

5. Gerät nach Anspruch 4, dadurch gekennzeichnet, daß die genannte Kammer (3) Vorkehrungen beinhaltet, um ein Testgas durch diese Kammer (3) in Berührung mit der genannten Oberfläche (10) fließen zu lassen.

6. Gerät nach Anspruch 5, dadurch gekennzeichnet, daß die Mittel (12) zur Veränderung der Temperatur der genannten Oberfläche (10) einen thermoelektrischen Kühler (Heizer) beinhalten, und daß die genannten Mittel (13) zur Bestimmung der Temperatur der Oberfläche einen Temperatursensor enthalten.

**Revendications**

1. Méthode pour déterminer des points de rosée dans un flux de gaz en obligeant un échantillon du flux de gaz à pénétrer dans une chambre de réception d'échantillon de gaz (3) et à venir en contact avec une surface de miroir (10), tandis qu'un faisceau lumineux (19) est dirigé sur ladite surface suivant un angle oblique par rapport à celle-ci de façon qu'en l'absence de condensation, le faisceau (19) soit au moins partiellement réfléchi par la surface (10) pendant que celle-ci est refroidie, en disposant des moyens détecteurs de lumière (20) de telle façon qu'ils ne reçoivent aucune lumière réfléchie et en obtenant des signaux électriques indiquant l'intensité d'une lumière diffusée à partir de ladite surface (10), lesdits signaux étant contrôlés pendant ladite étape de refroidissement; caractérisée en ce que :

le flux de gaz contient à la fois un hydrocarbure et de la vapeur d'eau;

ladite surface de miroir (10) possède une première partie polie et hautement réfléchissante et une seconde partie dépolie, moins réfléchissante de sorte qu'en l'absence de condensation, le faisceau (19) est sensiblement réfléchi par la première partie et sensiblement diffusé par la seconde partie;

lesdits moyens détecteurs de lumière (20) indiquant l'intensité de la lumière diffusée à partir desdites deux parties;

et en déterminant d'une manière indépendante les points de rosée de l'hydrocarbure et de la vapeur d'eau en une seule opération de mesure comportant les étapes qui consistent à déterminer le point de rosée pour la vapeur d'eau en enregistrant la température de ladite surface (10), lorsque lesdits signaux indiquent une augmentation de ladite intensité, due à la diffusion de la lumière, et en déterminant le point de rosée de l'hydrocarbure en enregistrant la température de ladite surface (10), lorsque lesdits signaux indiquent une diminution de l'intensité, le refroidissement étant poursuivi après la détermination du premier point de rosée détecté et jusqu'à ce que lesdits deux points de rosée aient été déterminés.

2. Dispositif de détection de points de rosée pour déterminer des points de rosée dans un flux de gaz, comportant :

une chambre de réception d'échantillon de gaz (3);

une surface de miroir (10) placée dans ladite chambre;

des moyens (12) pour changer la température de ladite surface et des moyens (13) pour contrôler la température de ladite surface;

une source de faisceau lumineux (18) disposée pour diriger un faisceau (19) de lumière sur ladite surface suivant un angle oblique, pendant que ladite surface (10) est refroidie de façon que la lumière provenant du faisceau (19) soit diffusée et réfléchie à partir de ladite surface (10); et

des moyens détecteurs de lumière (20) situés le long d'une trajectoire de détection de lumière, d'une manière générale, perpendiculaire à ladite surface, en vue de détecter la lumière diffusée à partir de ladite surface (10) et de produire des signaux de sortie correspondant à l'intensité de la lumière diffusée à partir de ladite surface;

caractérisé en ce que ladite surface de miroir (10) possède une première partie polie pour être hautement réfléchissante, et une seconde partie dépolie pour diffuser la lumière;

et en ce que lesdits moyens détecteurs de lumière sont disposés pour recevoir uniquement la lumière diffusée à partir des deux parties de ladite surface (10); lesdits moyens détecteurs de lumière (20) étant montés dans des moyens formant circuits (24) aptes à enregistrer aussi bien une augmentation de la lumière diffusée à partir de la première partie de ladite surface (10) en tant qu'indication d'un point de rosée d'une eau, qu'une diminution de la lumière diffusée à partir de la seconde partie de ladite surface (10) en tant qu'indication d'un point de rosée d'un hydrocarbure, et

lesdits moyens do changement de température (12) étant conçus pour continuer à refroidir ladite surface (10) après que le premier point de rosée a été indiqué et de façon que les deux points de rosée soient déterminés en une seule opération de mesure.

3. Dispositif selon la revendication 2, dans lequel les moyens détecteurs de lumière diffusée (20) sont conçus pour détecter sélectivement la lumière diffusée à partir des deux parties hautement réfléchissante et dépolie de ladite surface (10).

4. Dispositif selon la revendication 2 ou 3, comportant des moyens de traitement de données et de commande (24) pour commander un changement de la température de ladite surface (10) et pour commander la source de lumière de sortie (18) en fonction des conditions de surface de ladite surface (10).

5. Dispositif selon la revendication 4, dans lequel ladite chambre (3) est équipée pour permettre à un gaz d'essai de circuler à travers ladite chambre (3) afin de venir en contact avec ladite surface (10).

6. Dispositif selon la revendication 5, dans lequel lesdits moyens (12) pour changer la température de ladite surface (10) comportent un organe de refroidissement/chauffage thermoélectrique, tandis que lesdits moyens (13) pour déterminer la température de la surface comportent un détecter de température.

Fig. 1.

EP 0 257 806 B1